# EUROPEAN PATENT APPLICATION

(11) **EP 4 474 124 A1**
(43) Date of publication of application: **11.12.2024**
(21) Application number: 23178110.5
(22) Date of filing: 07.06.2023
(51) Int. Cl.: B29B 17/02, C08J 11/08, B29K 55/02, B29K 25/00

(54) **METHOD FOR RECOVERING SAN FROM ABS**

(71) Applicant: Nederlandse Organisatie voor toegepast-natuurwetenschappelijk Onderzoek TNO, 2595 DA 's-Gravenhage (NL)
(72) Inventor: VAN SOMEREN, Rudolf Gijsbertus, 2595 DA's-Gravenhage (NL); ROELANDS, Cornelis Petrus Marcus, 2595 DA's-Gravenhage (NL); VAN DER WAAL, Jan Cornelis, 2595 DA's-Gravenhage (NL)
(74) Representative: V.O.

(57) **Abstract**

A method is provided for recovering styrene acrylonitrile from an acrylonitrile butadiene styrene plastic, wherein the method comprises a dissolution step, wherein the plastic is heated in acetonitrile, resulting in a suspension comprising polybutadiene particles dispersed in acetonitrile and dissolved styrene acrylonitrile; and separating the polybutadiene particles and dissolved styrene acrylonitrile either by a separation technique based on differences in density, or by microfiltration.

## Description

### Field

The invention is directed to a method for recovering styrene acrylonitrile (SAN) from an acrylonitrile butadiene styrene (ABS) plastic, as well as the use of this method in ABS plastic recycling.

### Introduction

Acrylonitrile butadiene styrene (ABS) plastic is a hard, tough, heatresistant plastic. It is widely used as a plastic material to make toys, automotive interiors, personal care items, and electronics.

ABS is a polymer of acrylonitrile, styrene and butadiene. ABS consists of styrene acrylonitrile (SAN) and polybutadiene. ABS comprises a continuous phase of styrene-acrylonitrile copolymer and polybutadiene particles dispersed in (and preferably uniformly distributed throughout) said continuous phase. The continuous phase of SAN may also be referred to as the SAN matrix. ABS has three monomeric units, *viz*. butadiene units, acrylonitrile units, and styrene units. ABS typically consists of 15% to 35% monomeric unit of acrylonitrile, 5% to 30% monomeric unit of butadiene and 40% to 60% monomeric unit of styrene.

ABS is made by polymerizing styrene and acrylonitrile in the presence of polybutadiene. ABS can be produced by mass polymerization (also known as bulk polymerization) or by emulsion polymerization. ABS obtained by a mass polymerization process is also referred to as mass-polymerized ABS or m-ABS, while ABS obtained by emulsion polymerization process can be referred to as emulsion-polymerized ABS or e-ABS. More in particular, m-ABS is produced by polymerizing styrene and acrylonitrile in the presence of dissolved polybutadiene, resulting in SAN-grafted polybutadiene particles dispersed in a continuous SAN phase. e-ABS is typically produced by compounding SAN-grafted polybutadiene particles, produced in an emulsion process, with bulk-polymerized SAN.

ABS plastic is typically a mix of ABS polymer and one or more additives. When preparing ABS plastic, use is typically made of plastic compounding. In plastic compounding, SAN is mixed in a molten state with polybutadiene and optionally one or more additives. In case of m-ABS, additives may be added via compounding after ABS polymerization. In case of e-ABS, additives are typically compounded during ABS polymerization. Depending on the temperature and additives used, the properties of the ABS plastic can be tuned.

A disadvantage of using ABS plastic to produce plastic products is that its material properties may degrade over time, especially with respect to shock absorption. The reason for the decrease in material properties is the degradation and/or crosslinking of polybutadiene particles over time. In particular, polybutadiene may crosslink, resulting in a polymer network within the polybutadiene rubber, and leaving the ABS plastic to become more brittle. Accordingly, any properties in ABS that are dependent on the presence of polybutadiene particles will decrease upon degradation or crosslinking of polybutadiene. For example, one of the functions of polybutadiene in ABS is to provide it with good shock absorption properties. ABS plastic will experience a decrease in its shock absorption properties after several years.

Accordingly, there is a need for methods to recycle ABS. In particular, there is a need to separate polybutadiene and SAN, such that the degraded and/or crosslinked polybutadiene particles can be replaced by fresh particles.

It is known to recycle ABS using dissolution techniques to separate different components, for example from EP4019576A1 and WO2015076868A1.

EP4019576A1 describes a method of recycling a toughened thermoplastic polymer toughened with elastomer particulates. The method comprises (a) dissolving the thermoplastic polymer in a solvent to form a solution, wherein the elastomer is dispersed within the solution as particulates; and (b) applying centrifugal force to separate the elastomeric particles from the solution to form a separated system; and (c) recovering the thermoplastic polymer and elastomeric polymer. An embodiment is described wherein the recovered thermoplastic polymer may be SAN with some trace of elastomeric polymer (e.g. polybutadiene or polyisoprene). As the solvent, acetone or chloroform or mixtures thereof are used. A second solvent (chloroform) may be used to swell the elastomeric particles

A disadvantage of EP4019576A1 is that when used for separating SAN and polybutadiene particles, a co-solvent (chloroform) is required to be able to remove the polybutadiene particles. The inventors realized that in the absence of chloroform, polybutadiene particles could not effectively be removed by settling or filtration.

WO2020082184A1 describes a process for recycling thermoplastic (co)polymer waste comprising dissolving the polymer waste in a suitable solvent to obtain a mixture of liquid and solids; heating the mixture under acidic conditions then cooling the mixture to obtain a supernatant comprising thermoplastic (co)polymer in solution and a solid waste residue; and separating the supernatant from the solid waste residue. ABS is mentioned as an example of a thermoplastic. In case the thermoplastic is ABS or SAN, chlorinated solvents are mentioned as suitable solvents, in particular dichloroethane and optionally an alcohol nonsolvent. WO2020082184A1 teaches to remove particles having a size or diameter of less than 1 micrometre are removed by flocculation.

A disadvantage of WO2020082184A1 is that flocculation requires the use of additional chemicals.

WO2015076868A1 describes a method for recovering a purified polymer composition. The method uses a first solvent to attain a liquid-solid phase separation of a first component from a target (polycarbonate) polymer and a second component. Subsequently, the method uses a second solvent to attain a liquid-solid phase separation of the target polycarbonate polymer from the second component. Acrylonitrile butadiene styrene polymer is mentioned as an example of the second component. Acetonitrile is mentioned as an example of a (first or second) solvent or anti-solvent. WO2015076868A1 does not address how to separate ABS and polybutadiene.

### Summary

An object of the invention is to provide a method for improving the material properties of old ABS.

A further object of the invention is to provide a method for recycling ABS wherein degraded or crosslinked polybutadiene particles are replaced by fresh particles.

A further object of the invention is to recover SAN from ABS without degraded or crosslinked polybutadiene being present.

One or more of these objects was achieved by providing a method for recovering styrene acrylonitrile from an acrylonitrile butadiene styrene plastic, wherein the method comprises a dissolution step, wherein the plastic is heated in acetonitrile, resulting in a suspension comprising polybutadiene particles dispersed in acetonitrile and dissolved styrene acrylonitrile; and separating the polybutadiene particles and styrene acrylonitrile either by a separation technique based on differences in density, or by microfiltration.

The inventors found that by exposing ABS to specific solvents, SAN can be dissolved, while the polybutadiene particles do not dissolve and remain dispersed in the SAN-solution. However, the inventors also found that removing the dispersed polybutadiene particles from the SAN solution was very difficult to achieve. These particles typically do not settle down in the solvent wherein SAN is dissolved, but rather remain dispersed throughout the solvent. Also, the application of micro-filtration to the SAN solution with dispersed polybutadiene particles did not work, as the dispersed polybutadiene particles would pass through the filter bed, together with the SAN solution.

Although the above difficulties hold true for organic solvents typically used in dissolution techniques (such as acetone and to ethyl acetate), acetonitrile formed an exception to the rule. By dissolution of ABS in acetonitrile at elevated temperature, it was observed that the SAN polymer dissolved while the polybutadiene particles did not dissolve and were initially dispersed in the SAN solution. However, when left over time, the polybutadiene particles settled to the bottom of the container.

### Detailed description

In a first aspect, the invention is directed to a method for recovering SAN from an ABS plastic comprising a dissolution step and a separation step. More in particular, the invention may be directed to a single solvent process for recovering styrene acrylonitrile, wherein the method comprises a dissolution step, a separation step, and a precipitation step.

The term `ABS' as used herein refers to the ABS polymer. ABS thus consists of styrene acrylonitrile (SAN) and polybutadiene. The term `ABS' does not include any additives that may be present in the ABS plastic.

The term 'ABS plastic' as used herein refers to a plastic that mainly consists of ABS. An ABS plastic may include one or more additives, in addition to SAN and polybutadiene. An ABS plastic contains more than 50 wt.%, preferably at least 80 wt.% ABS, more preferably at least 90 wt.%, even more preferably at least 95 wt.%, for example at least 98 wt.% or at least 99 wt.% ABS.

The ABS plastic may be a mix of ABS polymer and one or more additives. For example, the ABS plastic may be a compounded plastic. The one or more additives may be selected from the group of pigments, flame retardants, minerals, lubricants, stabilizers, fibres, antioxidants and fillers. The ABS plastic may comprise a stabilizer, for example one or more of a heat stabilizer, hydrolysis stabilizer and UV stabilizer. Such additives may have been incorporated in the ABS plastic by plastic compounding. In plastic compounding, a plastic is formed by mixing polymers in a molten state with additives. Upon cooling, a plastic material is obtained that is a mix of polymers and additives. A plastic obtained by plastic compounding is referred herein as a compounded plastic.

The amount of additives in the ABS plastic may be in the range of 0.1 to 40 wt.%, preferably 0.5 to 25 wt.%, more preferably 1.0 to 15 wt.%, for example 3 to 10 wt.%. In case no flame retardant is present, the amount of additives in the ABS plastic may be in the range of 0.1 to 10 wt.%, preferably 0.5 to 5 wt.%, for example 1 to 3 wt.%.

The ABS plastic may comprise a flame retardant as an additive. For example, the ABS plastic may comprise brominated flame retardant (BFR) and antimony trioxide. The amount of flame retardant present in the ABS plastic may be 1 to 30 wt.%, for example 5 to 20 wt.%.

The additives present in the ABS plastic are typically and preferably nonpolymeric additives. Polymeric material may not readily dissolve in acetonitrile, which may impede the release of polybutadiene particles from the plastic. In an embodiment, at least 95 wt.%, preferably at least 98 wt.%, more preferably at least 99 wt.%., even more preferably at least 99.9 wt.% of the polymeric material present in the ABS plastic is ABS. In a preferred embodiment, no other polymer than ABS is present in the ABS plastic.

As described in the introduction, ABS is a polymer that comprises a continuous phase of SAN with polybutadiene particles dispersed in said continuous phase.

The term SAN refers to styrene acrylonitrile. SAN is a copolymer of styrene and acrylonitrile. SAN may comprise between 70 and 80 wt.% styrene monomer and 20 to 30% acrylonitrile monomer. As mentioned in the introduction, SAN forms a continuous phase (also called SAN matrix) in the ABS, in which polybutadiene has been dispersed.

The polybutadiene is present in ABS in the form of rubber particles. The size of the polybutadiene particles may be in the range of 0.05 - 3.0 µm, preferably in the range of 0.1 - 2.0 µm. Preferably, at least 95 wt.%, more preferably at least 99 wt.% of all polybutadiene particles present in the ABS plastic lie within the afore-mentioned size range. The ABS plastic may be m-ABS or e-ABS. The average particle size of the polybutadiene particles of e-ABS is smaller than that of m-ABS. Furthermore, the spread of different particle sizes in m-ABS is wider than in e-ABS. The majority (*e.g*. at least 90 wt.%, preferably at least 95 wt.%) of the polybutadiene particles in e-ABS have a size in the range of 0.1-0.3 µm. The majority (*e.g*. at least 90 wt.%, preferably at least 95 wt.%) of the polybutadiene particles in m-ABS have a size in the range of 0.1-2.0 µm.

The polybutadiene present in the ABS may be grafted with SAN. This means that the polybutadiene chains may contain side branches of SAN. A polybutadiene particle will be formed of multiple grafted polybutadiene chains. The use of SAN grafted on polybutadiene may improve its dispersion in the SAN bulk matrix during its preparation. Good results were obtained when conducting the method of the invention using grafted polybutadiene. The SAN grafted on polybutadiene may remain present during the method of the invention, at least in part. After separation, a part of or all of the polybutadiene particles may still contain an outer layer of SAN. Accordingly, the term 'polybutadiene particle' as used herein may both refer to a particle formed of ungrafted polybutadiene, as well as to a particle that contains polybutadiene grafted with SAN.

The ABS in the ABS plastic is preferably not crosslinked. It is hypothesized that a lower degree of crosslinking improves separation. The dissolution of SAN may be negatively affected in crosslinked ABS, especially at higher degrees of crosslinking. Preferably, the degree of crosslinking of SAN chains (*i.e*. the percentage of SAN chains that is crosslinked with another SAN chain) is less than 5%, preferably less than 2%, more preferably less than 1%.

The ABS plastic may be in the form of a powder, pellets, grains, or chips. A powder is preferred, as this form provides a large surface area for efficient dissolution. The ABS plastic may be obtained from a plastic object, for example by grinding or cutting the object. Accordingly, the method may further comprise the step of providing an ABS plastic, for example by grinding or cutting an object made of ABS plastic. The object may comprise or consist of ABS plastic.

The method may comprise the step of mixing a solvent and the ABS plastic, thereby obtaining a mixture of ABS plastic and a solvent. The solvent is acetonitrile. In this step, no other solvent than acetonitrile should be mixed with the ABS plastic. The entire method of the invention can be successfully conducted using a single solvent. The mixture of ABS plastic and solvent may be referred to as the dissolution mixture. The dissolution mixture may then be fed to the dissolution step.

In the dissolution step, the dissolution mixture comprising the ABS plastic and the solvent is heated. The ABS plastic is heated in acetonitrile, thereby dissolving the SAN present in the ABS. SAN is soluble in acetonitrile, whereas polybutadiene is not. Consequently, the dissolution step results in a suspension comprising polybutadiene particles dispersed in acetonitrile and dissolved styrene acrylonitrile. In particular, the resulting suspension is a suspension of polybutadiene particles dispersed in a SAN solution.

The dissolution step may be conducted at a temperature of at least 30 °C, preferably at a temperature in the range of 30-150 °C. The dissolution step can be conducted at elevated or at atmospheric pressure.

In case rapid dissolution is desired, the dissolution step is preferably at a temperature of 80-150 °C, preferably of 100-120 °C. Since the boiling point of acetonitrile is 82 °C, such a dissolution step is preferably conducted at elevated pressure. For example, the pressure may be in the range of 1.5-10 bar, preferably in the range of 3-5 bar. The dissolution step may be conducted until all SAN has been dissolved. The dissolution step has a duration of 1-60 minutes, preferably 2-30 minutes, more preferably 5-20 minutes. The subsequent process steps of the invention (such as filtration and separation) are preferably conducted at a temperature below the boiling point of acetonitrile and preferably at atmospheric pressure. Accordingly, the suspension obtained after the dissolution step may subsequently be cooled to a temperature below 100 °C, preferably below a temperature of 80 °C.

Alternatively, the dissolution step may be conducted at temperatures just above or below the boiling point of acetonitrile. The dissolution step may be conducted at a temperature of 40-80 °C, preferably 40-60 °C. In this case, the dissolution step is preferably conducted at atmospheric pressure. By heating the ABS plastic under these conditions, SAN will dissolve in the acetonitrile.

The amount of acetonitrile used in the dissolution step is 10 - 100 gram, preferably 30 - 50 gram acetonitrile per gram of ABS plastic.

The dissolution step may be conducted in a vessel capable of agitating the dissolution mixture. By agitation, the particles are kept in suspension and/or will dissolve more easily. The vessel can for example be agitated by stirring, pulsating or by oscillating. For example, the vessel may comprise a stirrer. Examples of suitable vessels for oscillating or pulsating are disc and doughnut type columns or vessels.

Acetonitrile used in the method of the invention preferably has a purity of at least 99.0 wt.%, more preferably a purity of at least 99.4 wt.%. For example, acetonitrile of Technical Grade may be suitably used, which typically has a purity of 99.5 wt.%. It was further found that the presence of other solvents negatively affected the separation of SAN and polybutadiene. Therefore, essentially no other solvent than acetonitrile is present in the solvent used in the method of the invention. Accordingly, the solvent used in the the method of the invention consists of at least 98 wt% acetonitrile, preferably at least 99.0 vol.% acetonitrile, more preferably at least 99.9 vol.% acetonitrile.

Preferably, no solvent is added to the dissolution mixture during dissolution, except for acetonitrile. Acetonitrile may for example be added during dissolution when the dissolution step is conducted as a continuous process. In particular, no solvent other than acetonitrile may be added to the ABS plastic in the dissolution step or preferably in any of the steps of the method of the invention before the dissolution step. Thus, acetonitrile will be the only organic solvent present in the dissolution mixture during dissolution. Although multi-solvent embodiments may in theory work, it was found that to achieve the most successful separation of polybutadiene and SAN, no other solvents than acetonitrile should be present in the dissolution mixture.

The dissolution step results in a suspension, wherein SAN has been dissolved in acetonitrile, and the polybutadiene has been dispersed in the SAN matrix. The suspension may have a SAN concentration of at least 0.01 g/ml, preferably at least 0.05 g/ml, more preferably 0.1 - 0.5 g/ml, more preferably 0.1 - 0.3 g/ml.

The suspension obtained in the dissolution step may comprise material other than SAN and polybutadiene. For example, the suspension may comprise solid material, in particular additives that are insoluble in acetonitrile. Such solid material will be dispersed in the acetonitrile. Examples of additives that are insoluble in acetonitrile are pigments.

Optionally, the method further comprise a step of removing solid material (e.g. additives or contaminants), which is conducted after the dissolution step and before the separation step. Such a step may be used to remove solid material other than polybutadiene from the suspension. Preferably, this is done by filtration (in which case this step may be referred to as a pre-filtration step). The pore size of the filter should be such that the polybutadiene particles will pass through the filter. In this way, solid material will remain in the filter, while the polybutadiene and SAN will end up in the filtrate. Such a filtration step may for example remove certain additives. Alternatives for using filtration to remove solid material prior to the separation step can be decantation and centrifugation.

Optionally, the method further comprise a step of removing dissolved material (such as additives or contaminants), which step is conducted after the dissolution step and before the separation step. The method may for example comprise a sorption step (e.g. adsorption). An example of a sorption step is contacting the suspension obtained in the dissolution step with activated carbon, for example by passing the suspension over a bed of activated carbon sorbents.

The method further comprises a separation step. In the separation step, polybutadiene particles and dissolved styrene acrylonitrile are separated. The separation step can be conducted by a separation technique based on differences in density. The separation step may also be conducted by microfiltration. The separation step results in a solid fraction comprising polybutadiene and a liquid fraction comprising dissolved SAN. Besides polybutadiene, the solid fraction may further comprise other undissolved material, such as undissolved additives, e.g. pigments. The amount of additives is typically relatively small. The polybutadiene particles may make up over 95 wt.% of the solid material present in the suspension processed in the separation step. The liquid fraction is a solution of SAN dissolved in acetonitrile, and may also be referred to herein as SAN solution. Thus, the separation step results in a solution of SAN in acetonitrile. SAN can subsequently be recovered further as a slurry or solid product by removing the solvent (*e.g*. via precipitation, filtration and/or evaporation).

In case the separation step is conducted by a separation technique based on differences in density, the styrene acrylonitrile and polybutadiene particles may be separated using one or more separation techniques selected from settling (*e.g.* gravity settling), cyclonic separation, centrifugation, and lamella separation. The separation step may for example be conducted in a settler, cyclonic separator, decanter, or lamella separator. In certain cases, *e.g.* in case of settling or gravity settling, the separation technique may be further combined with a decantation step. A decantation step may be effective in removing the SAN solution from the settled solids.

The separation step may comprise settling the suspension for a duration of at least 5 minutes, preferably at least 30 minutes. Such a settling step results in a bottom fraction comprising polybutadiene particles and a top fraction comprising dissolved styrene acrylonitrile (being the SAN solution). The bottom fraction is a slurry and comprises the solid fraction. The top fraction may be a clear solution, as polybutadiene settles to the bottom. The settling step is preferably conducted at a temperature below the boiling point of acetonitrile, for example below 70 °C or below 50 °C. It is not necessary to add coagulants or flocculants to achieve successful settling of the polybutadiene particles.

The separation step may further comprises a decantation step, for example in case settling is used. In case of settling, the separation step can be conducted by first settling the suspension (as described above), and then separating the top fraction from the slurry by decantation. Accordingly, a solution of dissolved styrene acrylonitrile in acetonitrile is obtained.

In another embodiment of the invention, the separation may be conducted by cyclonic separation, centrifugation, and lamella separation. This can be conducted with or without a settling step.

It is also possible to conduct separation in multiple steps. For example, the top fraction obtained after settling and decantation may be subjected to a second separation step. This second separation step can be one of the separation techniques described herein, for example microfiltration.

It was found that a successful separation could also be achieved when the separation step is conducted by microfiltration. The pore size of the microfilter should be smaller than 5 µm, preferably smaller than 3 µm, even more preferably smaller than 2 µm. In case of e-ABS, an even smaller pore size can be used, such as a pore size smaller than 1.0 µm or smaller than 0.5 µm. A settling step as described above may be conducted before microfiltration.

The microfiltration can be a bed filtration or a membrane filtration. In bed filtration, filtration is conducted using a filter bed. The filter bed may contain a filter aid. An example of a filter aid that can be used to create a filter bed suitable for microfiltration is celite or diatomaceous earth. Such filter aids may have a particle size in the range of 0.02 to 0.1 mm. The skilled person will know how to prepare a suitable filter bed using filter aids. Celite is commercially available, for example under the trademark Celite-545. In membrane filtration, the filtration is conducted using a membrane. Microfiltration can be conducted cross-flow filtration or dead-end filtration.

Optionally, the method further comprise a step of removing dissolved material (such as additives or contaminants), which step is conducted after the dissolution step and before the separation step. The method may for example comprise a sorption step (*e.g.* adsorption). An example of a sorption step is contacting the suspension obtained in the dissolution step with activated carbon, for example by passing the suspension over a bed of activated carbon sorbents.

The method of the invention can be conducted continuously. It may also be conducted batch-wise or semi-continuous. The SAN solution obtained in the separation step may still comprise dissolved additives and/or dissolved contaminants. The method may therefore comprise a purification step to remove dissolved material from the SAN solution. The method may for example comprise a sorption step (*e.g*. adsorption) or nanofiltration. In a preferred embodiment, the SAN solution is subjected to a step wherein the SAN solution is padded over a bed of activated carbon.. The sorption step may be conducted in a column or packed bed column filled with the adsorbent.

The method may further comprise a concentration step, wherein the concentration of SAN is increased. This can be easily achieved by evaporation, since the boiling point of acetonitrile is relatively low.

The method may further comprise a precipitation step, wherein the dissolved styrene acrylonitrile is precipitated from acetonitrile. Precipitation is preferably conducted at a temperature below the boiling point of acetonitrile, for example below 70 °C or below 50 °C. Precipitation may be conducted at atmospheric pressure or elevated pressure.

The SAN may be precipitated by removing solvent, *e.g*. by evaporation or flash evaporation.

It is in principle also possible to recover SAN from the SAN solution by antisolvent precipitation. However, antisolvent precipitation is not desired, as it unnecessarily adds an extra solvent to the SAN solution, as it may make the overall process more complex and costly. In such an embodiment, a mixture of solvent is formed and anti-solvent must be separated into pure solvent and antisolvent fractions, for example by distillation.

The method of the invention is preferably a single solvent process. The term 'single solvent process' as used herein refers to a process wherein the same solvent is used in all process steps, without addition of a second solvent (*i.e*. a solvent other than said same solvent). In a single solvent process according to the invention, SAN is precipitated from a first solvent without addition of a second solvent (*i.e*. a solvent different from the first solvent), which first solvent is the same solvent in which it was dissolved in the dissolution step. According to the first aspect of the invention, the first solvent is acetonitrile.

Even more preferably, the method of the invention is a single solvent dissolution and precipitation process. Such a process refers to a process wherein a compound (*i.e*. SAN) is recovered by dissolving it in a solvent to form a solution, and then precipitating the compound from that solution. Optionally, the solution may be subjected to one or more purification steps in between dissolution and precipitation (e.g. a step for removing undissolved material, such as a filtration step).

The precipitation step is preferably a single-solvent precipitation step. In single solvent precipitation, a compound is recovered by precipitating it from a solution by cooling. In single solvent precipitation, no anti-solvent is needed or used for precipitating the compound. The solvent from which the compound is precipitated is typically the same solvent that was used for dissolution.

The SAN recovered in the method of the the first aspect of the invention may be reused in plastics production, for example to prepare ABS and/or ABS plastic. By mixing the styrene acrylonitrile recovered in the method of the first aspect with fresh polybutadiene particles, recycled acrylonitrile butadiene styrene can be prepared.

In a second aspect, the invention is directed to a method for recycling ABS plastic. According to this aspect, SAN is recovered from ABS plastic according to the same method as described above for the first aspect of the invention. The method may further comprise the step of preparing a plastic by combining the recovered SAN with one or more polymers and optionally one or more additives. For example, the method of the second aspect may comprise the step of plastic compounding, wherein the recovered SAN is mixed with one or more polymers and optionally one or more additives. The SAN recovered in the precipitation step of the recovery method of the first aspect has a good purity and quality, which makes it suitable for direct or indirect use in plastic production. Preferably, ABS is prepared in the plastic compounding step. In this way, SAN is first recovered from ABS as described in the method of the first aspect, and subsequently used to prepare fresh ABS. In case ABS is prepared, the method comprises the step of mixing the recovered SAN with fresh polybutadiene particles. In case of plastic compounding, such a step may be conducted before or during the plastic compounding step.

In a further aspect, the invention is directed to the method of the first aspect, except that instead of acetonitrile, a different solvent is used. Although most solvents are not expected to work, the inventors expect that a certain amount of success may also be had using the solvents 2-ethoxyethanol, dimethylacetamide, dimethylformamide and 1-butanol.

### Examples

The invention will now be further illustrated by the following non-limiting examples.

### Example 1: Dissolution and Separation

An amount of 5 g of ABS was dissolved in 100 ml organic solvent. The mixture was stirred and heated for 2 hours at a temperature of 50°C. The resulting suspensions were then left to cool, after which it was settled overnight. The following organic solvent were used: acetonitrile, acetone, ethyl acetate, chlorobenzene, and benzonitrile. The table below shows the results.

| **Exp.** | **Solvent** | **Appearance after Heating and Settling** |
|---|---|---|
| 1 | Acetonitrile | Two-phase system with a clear liquid layer at the top and settled solids layer at the bottom |
| 2 | Acetone | Two-phase system with a turbid liquid layer at the top and a suspension layer at the bottom |
| 3 | Ethyl acetate | Single turbid phase; stable suspension |
| 4 | Chlorobenzene | Clear solution, no solids visible |
| 5 | Benzonitrile | Clear solution, no solids visible |
| 6 | Acetone / Chlorobenzene | Two-phase system with a turbid liquid layer at the top and a suspension layer at the bottom |
| 7 | Ethyl acetate / Chlorobenzene | Two-phase system with a suspension layer at the top and a turbid liquid layer at the bottom |

After the settling period overnight, and after visual observation, the suspensions were centrifugated for 1 hour. For experiments 2, 3, 6, and 7, in all cases densified suspension layers was observed at the bottom with a turbid liquid layer above it.

In order to determine the composition of the different layers obtained by dissolution of ABS in acetonitrile and in acetone, after settling overnight (experiments 1 and 2), samples were taken of the overlying liquid layer and of the suspension layer at the bottom. Both from the samples of the top layer and of the bottom layer, the solvent was evaporated, and the dry solid samples that were obtained, were subjected to analysis by Fourier-transform infrared spectroscopy (FTIR).

The FTIR results from the samples from experiment 1 indicated that the settled solids obtained in experiment 1 (acetonitrile) consisted mostly of PBD while the solids obtained from the clear top layer consisted mostly of SAN.

Solids obtained from experiment 1 were additionally analysed with Differential Scanning Calorimetry (DSC) combined with thermal gravimetric analysis (TGA). The results from analysis of samples from experiment 1 (acetonitrile) by DSC/TGA indicated an increased content of PBD in the settled solids and a lowered content of PBD in the solids obtained by evaporating the solvent from the liquid layer above it. The latter solids sample consists mostly of SAN.

### Example 2: m-ABS vs. e-ABS:

Experiment 1 of Example 1 was repeated for different types of ABS:
- ABS obtained by emulsion polymerization (e-ABS);
- ABS obtained by mass polymerization (m-ABS).

It was found that the separation was not as pronounced for m-ABS as it was for e-ABS. However, SAN and polybutadiene were successfully separated for both types of ABS. For both e-ABS and m-ABS samples, similar FTIR results were observed. Furthermore, for both e-ABS and m-ABS samples, similar DSC/TGA results were observed.

### Example 3: Microfiltration

Samples of 25 g of clear (naturel) e-ABS (virgin grade) and 25 g recycled black coloured ABS (mixture of m-ABS and e-ABS) were separately dissolved in 500 ml acetonitrile according to experiment 1 in Example 1. In both cases the SAN polymer dissolved while the PBD particles settled down at the bottom of the vessel. The solution above the settled solids obtained from the clear ABS, was only slightly turbid, while the solution above the settled solids obtained from the black ABS was coloured yellowish/orangish, and turbid with suspended black particles. In general, it was observed that bot PBD particles and pigment particles tend to settle down in the solutions of ABS in acetonitrile.

From these solutions, liquid samples were taken, and the solvent was evaporated to obtain the dissolved polymer as a dry sample for analysis by DSC/TGA.

Next, a microfilter with a pore size smaller than 5 µm was provided by preparing a filter bed of Celite filter aid. The suspension was next filtered at a constant rate over the filter bed by applying slight overpressure.

Part of the liquid layers above the settled solids, were next filtered over a bed filter and the filtrate was collected. The filtrate obtained from the solution of clear ABS, became a little less turbid compared to the liquid that was fed, while the filtrate obtained from the solution of black ABS, became visibly less turbid, but was still coloured yellowish/orangish. From the filtrates, samples were taken for analysis by DSC/TGA.

| **Steps:** | **Clear ABS** | | **Black ABS** | |
|---|---|---|---|---|
| settling | Liquid C : | *Slightly turbid* | Liquid B : | *Coloured, turbid* |
| | Settled Solids C | | Settled Solids B | |
| 1^{st} filtration | Filtrate 1C | *Slightly less turbid* | Filtrate 1B | *Visibly less turbid* |
| 2^{nd} filtration | Filtrate 2C | | Filtrate 2B | |

Part of the solutions were resuspended and next filtered over the filter bed and the filtrate was collected again. In both cases, the filtrates were very similar to the filtrates obtained in the previous step, from the clear liquids above the settled solids. It was concluded that both PBD particles and pigment particles can be removed by micro-filtration, and also that PBD particles and pigments can be removed together by micro-filtration. From the filtrates, samples were taken for analysis by DSC/TGA.

DSC/TGA analysis results of the obtained samples were compared to those of the feedstock materials e-ABS and recycled ABS. These indicated that the samples obtained from in the liquid layer above the settled solids (Liquids B and C), had a factor 10-20 times lower content of PBD than the feedstock materials. The samples obtained from the filtrates (Filtrates 1B, 1C) had a further reduced PBD, corresponding to a factor 20-40x lower content of PBD than the feedstock materials. It was concluded that microfiltration managed to remove a significant amount of PBD from the acetonitrile suspension obtained by the method of the invention.

### Example 4: Mixed Solvents:

This example shows the effect of the presence of a second solvent in acetonitrile.

ABS solutions were prepared in solvent mixtures; 0.5 gram ABS was dissolved in 10ml of the solvent mixtures according to the table below. The combinations of two solvents that were used for the solvent mixtures were

| #Mixtures | Acetonitrile (vol.%) | 2-MeTHF (vol.%) | EtOAc (vol.%) | Result after settling: |
|---|---|---|---|---|
| 1 | 100 | 0 | 0 | Two-phase system, with clear liquid top fraction |
| 2 | 80 | 20 | 0 | Suspension |
| 3 | 50 | 50 | 0 | Suspension |
| 4 | 20 | 80 | 0 | Suspension |
| 5 | 0 | 100 | 0 | Suspension |
| 6 | 80 | 0 | 20 | Suspension |
| 7 | 50 | 0 | 50 | Suspension |
| 8 | 20 | 0 | 80 | Suspension |
| 9 | 0 | 0 | 100 | Suspension |
| 10 | 95 | 5 | 0 | Suspension |
| 11 | 95 | 0 | 5 | Suspension |

After 3 hours of stirring at 50°C, dissolving was not complete for all solvent compositions. The solutions were heated to 65°C for an hour. Then the solutions were stirred overnight at 40°C. The solutions were then left to cool to room temperature and settle.

After 60 minutes of settling, only mixture #1 (*i.e*. acetonitrile) managed to separate into a two-phase system, with a clear liquid at the top and a slurry at the bottom. The other mixtures did not settle and remained suspensions. In mixtures 2, 3, 6 and 7 some of the rubber particles seemed to float to the top. After 15 additional hours of settling, all mixtures except #1 remained stable suspensions.

## Claims

1. Method for recovering styrene acrylonitrile from an acrylonitrile butadiene styrene plastic, wherein the method comprises
a dissolution step, wherein the plastic is heated in acetonitrile, resulting in a suspension comprising polybutadiene particles dispersed in acetonitrile and dissolved styrene acrylonitrile; and
separating the polybutadiene particles and dissolved styrene acrylonitrile either by a separation technique based on differences in density, or by microfiltration.

2. Method according to claim 1, wherein the styrene acrylonitrile and polybutadiene particles are separated using one or more separation techniques selected from settling, gravity settling, cyclonic separation, centrifugation, and lamella separation.

3. Method according to claim 2, wherein the separation step comprises settling the suspension in the absence of flocculants and coagulants for a duration of at least 5 minutes, preferably at least 30 minutes, resulting in a bottom fraction comprising polybutadiene particles, and a clear top fraction comprising dissolved styrene acrylonitrile.

4. Method according to claim 3, wherein after settling, the top fraction is decanted, thereby obtaining a solution of dissolved styrene acrylonitrile in acetonitrile.

5. Method according to claim 1, wherein the styrene acrylonitrile and polybutadiene particles are separated by microfiltration.

6. Method according to any of the previous claims, wherein the dissolution step is conducted at a temperature of at least 30 °C, preferably at a temperature in the range of 30-90 °C, preferably 40-70 °C, more preferably 40-60 °C.

7. Method according to any of the previous claims, wherein the dissolution step is conducted at elevated pressure at a temperature of 80-150 °C, and wherein the suspension is subsequently cooled before separating the polybutadiene particles and dissolved styrene acrylonitrile to a temperature below 80 °C.

8. Method according to claim 1, wherein the method for recovering styrene acrylonitrile is a single-solvent dissolution and precipitation process.

9. Method according to any of the previous claims, further comprising
a precipitation step, wherein the dissolved styrene acrylonitrile is precipitated from acetonitrile.

10. Method according to claim 9, wherein the dissolved styrene acrylonitrile is precipitated by cooling precipitation, by evaporation of acetonitrile, or by a combination of these two.

11. Method according to any of the previous claims, further comprising a filtration step conducted before the separation step, wherein the filter used has a pore size that is sufficiently large for the polybutadiene particles to pass through.

12. Method according to any of the previous claims, further comprising a sorption step for removing dissolved additives or contaminants from the suspension or from the solution of dissolved styrene acrylonitrile in acetonitrile obtained in the separation step.

13. The method according to any of the previous claims, wherein the amount of acetonitrile used in the dissolution step is 10 - 100 gram, preferably 30 - 50 gram acetonitrile per gram of ABS plastic.

14. Method for recycling acrylonitrile butadiene styrene plastic, comprising
a dissolution step, wherein the plastic is heated in acetonitrile, resulting in a suspension comprising polybutadiene particles dispersed in acetonitrile and dissolved styrene acrylonitrile; and
separating the polybutadiene particles and dissolved styrene acrylonitrile either by a separation technique based on differences in density, or by microfiltration; and
preparing a recycled plastic, wherein the separated styrene acrylonitrile is combined with one or more polymers and optionally one or more additives.

15. Method according to claim 14, wherein the recycled plastic is prepared by plastic compounding, wherein the separated styrene acrylonitrile is mixed with fresh polybutadiene particles.
